(19) Europäisches Patentamt
European Patent Office
Office européen des brevets

(11) **EP 4 760 592 A1**

(12) **EUROPEAN PATENT APPLICATION**

(43) Date of publication:
**17.06.2026 Bulletin 2026/25**

(21) Application number: **25213230.3**

(22) Date of filing: **04.11.2025**

(51) International Patent Classification (IPC):
**G06N 3/042** (2023.01)   **G06N 3/045** (2023.01)
**G06N 3/0475** (2023.01)   **G06N 3/096** (2023.01)
**G06N 3/0464** (2023.01)   **G06N 3/048** (2023.01)
**G06N 3/09** (2023.01)   **G06N 3/094** (2023.01)
**G06N 5/022** (2023.01)

(52) Cooperative Patent Classification (CPC):
**G06N 3/0475; G06N 3/042; G06N 3/045;**
**G06N 3/096;** G06N 3/0464; G06N 3/048;
G06N 3/09; G06N 3/094; G06N 5/022

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **12.12.2024   CN 202411833909**

(71) Applicant: **Kingfar International Inc.**
**Beijing 100193 (CN)**

(72) Inventors:
• **ZHAO, Qichao**
  **Beijing, 100193 (CN)**
• **WANG, Qingju**
  **Beijing, 100193 (CN)**

(74) Representative: **Dr. Gassner & Partner mbB**
**Wetterkreuz 3**
**91058 Erlangen (DE)**

(54) **RECOGNITION METHOD, RECOGNITION EQUIPMENT, DEVICE AND MEDIUM FOR RECOGNIZING A PERSONAL STATE BASED ON MULTI-MODAL DATA**

(57)     The present application relates to a recognition method, equipment, device and medium for recognizing a personal state based on multi-modal data. The recognition method includes: acquiring sample physiological data in a plurality of modes of a plurality of subjects respectively in each state preset by a state classifier; acquiring multi-modal to-be-analyzed physiological data of a target person; enhancing the sample physiological data by applying a GAN to obtain augmented baseline data; extracting multi-modal graph features of the normalized baseline data by applying a GCN to obtain state features related to each state preset by the state classifier; with the normalized baseline data including the state features as a source domain and the multi-modal to-be-analyzed physiological data as a target domain, performing transfer adaptation from the source domain to the target domain by applying a domain adaptation network so as to extract individual-independent objective physiological data features in the multi-modal to-be-analyzed physiological data; and inputting the individual-independent objective physiological data features to the state classifier so as to determine the personal state of the target person according to an output result of the state classifier.

FIG. 1

EP 4 760 592 A1

**Description**

**TECHNICAL FIELD**

The present application relates to a technical field of intelligent individual state recognition, and in particular, to a recognition method, recognition equipment, device and medium for recognizing a personal state based on multi-modal data.

**BACKGROUND ART**

State recognition based on physiological and psychological signals has been widely applied to aspects, such as medical treatment and health, traffic driving, military defense, and user experience, while the solution of individual differences is one of important challenges in this field, and due to the problem of individual differences, prediction accuracy of a model for new individuals is decreased, which limits the practical application and development of state recognition for the physiological and psychological signals. In order to reduce influences of the individual differences on the state recognition, at present, researchers have proposed various methods, such as data calibration, feature extraction, transfer learning, and adversarial learning, so that the model can better adapt to physiological and psychological feature changes of different individuals.

The current state recognition method has the following problems:

1. due to limitations of application scenarios, for most of existing technologies, a small number of baselines can only be collected, it is difficult to expand the collection scale, and therefore, a generalization ability is weakened due to the lack of big data in the model.

2. A data source has only a single physiological signal, which can usually reflect specific physiological activities only; and there may be greater changes among individuals, and especially, baseline states, emotional responses or physiological conditions are more easily affected by noise.

3. There is excessive dependence on single-modal data, a domain adversarial neural network is complex and unstable, and excessive domain differences will affect performance of the model.

These factors all highlight the importance of state recognition for reducing individual differences by using multi-modal psychophysiological models. Therefore, how to provide a state recognition method for reducing individual differences has become an urgent technical problem to be solved.

**SUMMARY**

In order to reduce influences of individual differences on a state recognition process, the present application provides a recognition method, recognition equipment, device and medium for recognizing a personal state based on multi-modal data.

In a first aspect, the present application provides the recognition method for recognizing the personal state based on multi-modal data, including:

acquiring sample physiological data in a plurality of modes of a plurality of subjects respectively in each state preset by a state classifier;

acquiring multi-modal to-be-analyzed physiological data of a target person;

enhancing the sample physiological data by applying a GAN to obtain augmented baseline data;

normalizing the baseline data;

extracting multi-modal graph features of the normalized baseline data by applying a GCN, and determining the multi-modal graph features as state features related to each state preset by the state classifier;

with the normalized baseline data including the state features as a source domain and the multi-modal to-be-analyzed physiological data as a target domain, and performing transfer adaptation from the source domain to the target domain by applying a domain adaptation network to obtain common features related to the state features in the target domain, thereby determining the common features as individual-independent objective physiological data features in the multi-modal to-be-analyzed physiological data; and

inputting the individual-independent objective physiological data features to the state classifier, and determining the personal state of the target person according to an output result of the state classifier.

According to the above-mentioned technical solution, by applying the GAN, original sample physiological data can be enhanced to generate more diversified data, which solves the problem of sample insufficiency or data unbalance possibly occurring during physiological data collection; by extracting the multi-modal graph features of the normalized baseline data by applying the GCN, the complex association and interaction among different-modal physiological data can be captured, and physiological states of users can be reflected more accurately; by performing transfer learning from the source domain to the target domain by applying the domain adaptation network with the normalized baseline data including the state features as the source domain and the to-be-analyzed physiological data as the target domain, individual differences in physiological data of the different users can be overcome, the individual-independent objective physiological data features can be extracted, and finally, the individual-independent objective physiological data features are inputted to the preset state classifier, by which accurate recognition for the unit personal state of the target person can be realized.

Further, the state features further include: extracting spatial features in each uni-modal in the plurality of modes of the normalized baseline data by applying a CNN.

According to the above-mentioned technical solution, the CNN can deeply capture the spatial features of each uni-modal physiological data due to its high feature extraction ability, and can further screen features, i.e., the state features, closely related to the state from uni-modal spatial features, these features can reflect physiological states of the users more accurately, the multi-modal graph features have been extracted by the GCN in a previous step, now, the uni-modal spatial features extracted by applying the CNN can provide additional information for multi-modal feature fusion, and two kinds of features have different emphases and advantages when describing the physiological data, and their combination can reflect the physiological states of the users more comprehensively.

Further, the acquiring sample physiological data in the plurality of modes of the plurality of subjects respectively in each state preset by the state classifier includes:

acquiring first multi-modal physiological data within a first preset time period of the plurality of subjects respectively in each state preset by the state classifier;

intercepting second multi-modal physiological data within a second preset time period based on the first multi-modal physiological data, the second preset time period is less than the first preset time period;

dividing the second multi-modal physiological data according to a preset length and a preset overlapping ratio to obtain a plurality of multi-modal physiological data fragments; and

denoising the plurality of multi-modal physiological data fragments to obtain the sample physiological data.

According to the above-mentioned technical solution, by means of a division of the data fragments, an analysis unit can be further detailed, and local features and change rules of the physiological data can be explored more deeply during research; the setting of the preset length and the overlapping ratio is beneficial to balance of a degree of detail of the data and computation of cost, and ensures comprehensiveness and accuracy of analysis; and denoising is an important step of data preprocessing, and aims at eliminating or weakening noise and interference factors in the data and improving purity and quality of the data.

Further, the enhancing the sample physiological data by applying the GAN to obtain the augmented baseline data includes:

constructing a generator corresponding to each uni-modal, the generator sequentially including convolutional layers and an activation function;

constructing a discriminator corresponding to each uni-modal, the discriminator including a plurality of fully-connected layers, and an elimination layer is introduced to a first fully-connected layer of the plurality of fully-connected layers;

performing feature mapping and transformation on random noise by the generator, and outputting new sample data similar to the sample physiological data in each uni-modal;

performing adversarial training by the generator and the discriminator according to a preset learning speed until a number of iterations is reached to obtain updated new sample data corresponding to each uni-modal; and

taking the sample physiological data and the new sample data that correspond to each uni-modal as the augmented multi-modal baseline data.

According to the above-mentioned technical solution, the generator can convert the random noise into the new sample data similar to real physiological data by means of the feature mapping and transformation, thereby realizing an augmentation of the data; the discriminator includes the plurality of fully-connected layers, and the elimination layer is introduced to the first fully-connected layer, which is beneficial to the improvement of ability of the discriminator distinguishing real and false data; after repeated iterative training, the generator can generate the new sample data highly similar to the real physiological data; and the sample physiological data and the new sample data that correspond to each uni-modal are combined to form the augmented multi-modal baseline data, which provides abundant data resources for subsequent analysis and research.

Further, the extracting multi-modal graph features of the normalized baseline data by applying the GCN includes:

extracting features of the normalized baseline data, and establishing a connected graph according to the features of the baseline data;

acquiring a node feature matrix X and an adjacent matrix A in the connected graph by an input layer of the GCN, the node feature matrix X is an N×M matrix, N is a total number of nodes, M is a feature dimension of each node, and the adjacent matrix A is an N×N matrix;

updating the node feature matrix layer by layer by hidden layers of the GCN by means of repeated graph convolutions to generate a new node representation, a propagation formula of the hidden layers is expressed as:

$$H^{l+1} = \sigma\left(\widetilde{D}^{-\frac{1}{2}}\widetilde{A}\widetilde{D}^{-\frac{1}{2}}H^{l}W^{l}\right)$$

wherein Ã is an adjacent matrix of a connected graph having additional self-connection, Ã=A+I, and I is a unit matrix; D̃ is a degree matrix of Ã; $\tilde{D}^{-\frac{1}{2}}\tilde{A}\tilde{D}^{-\frac{1}{2}}$ is a symmetric normalized Laplacian matrix of A; $H^l$ is a feature matrix on a first layer, i.e., X of the input layer; σ is an activation function; and $W^l$ is a weight matrix of the first layer; and

performing classification by an output layer of the GCN according to the latest node feature matrix to obtain the multi-modal graph features of the normalized baseline data.

By adopting the above-mentioned technical solution, the features are extracted from the baseline data, the connected graph is constructed according to these features, so that complex relationships and information in the baseline data can be intuitively expressed in a form of a graph; due to an introduction of the node feature matrix X and the adjacent matrix A, the GCN can consider a connection relationship between a feature of a node and the node at the same time, thereby capturing deep features of the baseline data more accurately; the hidden layers update the node feature matrix layer by layer by means of repeated graph convolutions operations to generate the new node representation, and in such a process, the deep features in the baseline data can be gradually extracted, and the expression ability and discriminability of the features can be improved; and the output layer performs classification according to the latest node feature matrix to obtain the multi-modal graph features of the normalized baseline data, and can convert the deep features extracted by the GCN into specific classification results, which provides useful information for subsequent analysis and research.

In a second aspect, the present application provides a recognition equipment for recognizing the personal state based on multi-modal data, including:

a sample physiological data acquisition module configured to acquire sample physiological data in a plurality of modes of a plurality of subjects respectively in each state preset by a state classifier;
a to-be-analyzed physiological data acquisition module configured to acquire multi-modal to-be-analyzed physiological data of a target person;
an enhancement module configured to enhance the sample physiological data by applying a GAN to obtain augmented baseline data;
a normalization module configured to normalize the baseline data;
a state feature determination module configured to extract multi-modal graph features of the normalized baseline data by applying the GCN, and determine the multi-modal graph features as state features related to each state preset by the state classifier;
an individual-independent physiological data feature extraction module configured to, with the normalized baseline data including the state features as a source domain and the to-be-analyzed physiological data as a target domain, perform a transfer adaptation from the source domain to the target domain by applying a domain adaptation network to obtain common features related to the state features in the target domain, thereby determining the common features as individual-independent objective physiological data features in the to-be-analyzed physiological data; and
a state recognition module configured to input the individual-independent objective physiological data features to the state classifier, and determine the personal state of the target person according to an output result of the state classifier.

In a third aspect, the present application provides an electronic device.
The electronic device, including:

at least one processor;
at least one memory;
at least one computer program, the at least one computer program is stored in the at least one memory and is configured to be executed by the at least one processor, and the at least one computer program is configured to implement the method according to anyone in the first aspect.

In a fourth aspect, the present application provides a computer-readable storage medium, storing a computer program that can be loaded by a processor and can execute the method according to anyone in the first aspect.
In conclusion, the present application includes at least one of the following beneficial technical effects:

1. by applying the GAN, original sample physiological data can be enhanced to generate more diversified data, which solves the problem of sample insufficiency or data unbalance possibly occurring during physiological data collection;
2. by extracting the multi-modal graph features of the baseline data by applying the GCN, the complex association and interaction among different-modal physiological data can be captured, and physiological states of users can be reflected more accurately;
3. the uni-modal spatial features extracted by applying the CNN can provide additional information for multi-modal feature fusion, and the two kinds of features have different emphases and advantages when describing the physiological data, and their combination can reflect the physiological states of the users more comprehensively; and
4. by performing transfer learning from the source domain to the target domain by applying the domain adaptation network with the normalized baseline data including the state features as the source domain and the to-be-analyzed physiological data as the target domain, individual differences in physiological data of the different users can be overcome, the individual-independent objective physiological data features can be extracted, and finally, the individual-independent objective physiological data features are inputted to the preset state classifier, by which accurate recognition for the anyone personal state of the target person can be realized.

## BRIEF DESCRIPTION OF THE DRAWINGS

FIG. 1 is a flowchart of a recognition method for recognizing a personal state based on multi-modal data according to an embodiment of the present application;
FIG. 2 is a schematic structure diagram of a GCN according to the embodiment of the present application;
FIG. 3 is a structure block diagram of a recognition equipment for recognizing the personal state based on multi-modal data according to the embodiment of the present application;
FIG. 4 is a structure block diagram of an electronic device according to the embodiment of the present application.

List of reference signs: 200. recognition equipment; 201. sample physiological data acquisition module; 202. to-be-analyzed physiological data acquisition module; 203. enhancement module; 204. normalization module; 205. state feature determination module; 206. physiological data feature extraction module; 207. state recognition module; 300. electronic device; 301. processor; 302. bus; 303. memory; 304. transceiver; 305. display screen.

## DETAILED DESCRIPTION

In order to make objects, technical solutions and advantages of the embodiments of the present application clearer, the technical solutions in the embodiments of the present application will be described clearly and completely below in conjunction with the accompanying drawings in the embodiments of the present application. The described embodiments are a part of the embodiments of the present application, not all the embodiments. Based on the embodiments of the present application, all other embodiments obtained by those of ordinary skill in the art without creative work shall fall within the scope required to be protected by the claims of the present application.

In addition, the term "and/or" described herein only describes a relationship among associated objects, and denotes that there may be three relationships. For example, A and/or B may denote three situations that there is A alone; there are A and B at the same time; and there is B alone. In addition, the character "/" described herein generally denotes that forward and backward associated objects are in an "or" relationship unless otherwise noted.

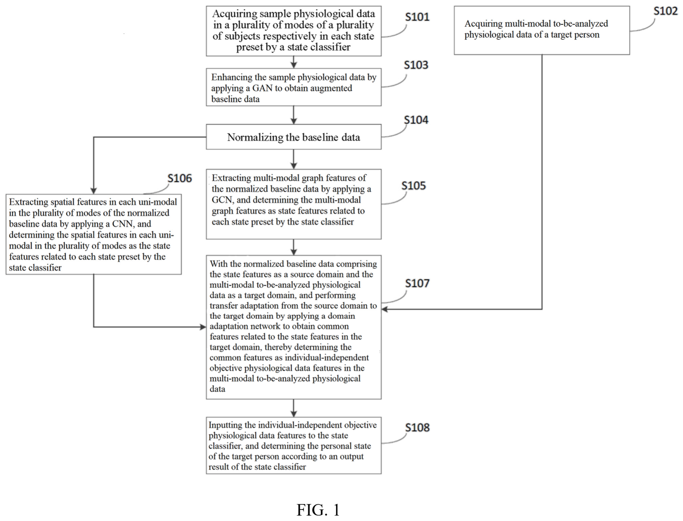

An embodiment of the present application discloses a recognition method for recognizing a personal state based on multi-modal data. Referring to FIG. 1, this method is performed by an electronic device, and the electronic device may be a server or a terminal device. For example, the server may be an independent physical server, or a server cluster or distributed system consisting of a plurality of physical servers, or a cloud server providing cloud computation service. The terminal device may be a smartphone, a tablet personal computer, a desktop computer, etc., but is not limited thereto. This method includes step S101 to step S108:

step S101: acquiring sample physiological data in a plurality of modes of a plurality of subjects respectively in each state preset by a state classifier.

Specifically, the sample physiological data is from data of the plurality of subjects in each state preset by the state classifier, the subjects are individuals participating in data collection, the subjects may be either healthy people or people in a certain specific state, which usually depends on a purpose of research. For example, during research on fatigue driving monitoring, the subjects may be personnel who can drive vehicles.

A kind of each state preset by the state classifier may be set according to an application scenario of state recognition. For example, when the state recognition is applied to fatigue driving monitoring, data of the subjects in a fatigue driving state and a non-fatigue driving state is respectively acquired; when the state recognition is applied to user emotion recognition, data of the subjects in each emotion is respectively acquired; and when the state recognition is applied to operator distraction recognition, data of the subjects in concentrated and distracted operation states is respectively acquired. At the same time, the electronic device trains the state classifier for recognizing the personal state according to a state recognition demand of an application occasion.

In order to improve accuracy of recognizing the personal state by means of the physiological data, in the present application, the sample physiological data in the plurality of modes is adopted, and the physiological data of the subjects or users is acquired by means of communication between the electronic device and a physiological signal collection device. The electronic device supports common collection for physiological signals of the subjects or users, and information collected from every kind of product corresponds to a uni-modal sample data. Time synchronization is performed on the electronic device and information collection devices, so that uni-modal data sent by all the information collection devices in different states is acquired at the same time, and the electronic device further synchronizes the plurality of uni-modal data to obtain the multi-modal data.

The physiological signals are data capable of reflecting physiological and psychological states of the subjects or users, such as any varieties of EEG (Electroencephalogram), fNIRS (functional near-infrared spectroscopy), PPG (PhotoPlethysmoGraphy), EDA (Electrodermal activity), RESP (Respiration), SKT (skin temperature), SPO2 (oxygen saturation), ECG (electrocardiogram), EMG (electromyelogram), and HRV (Heart Rate Variability). In the embodiment of the present application, EEG data, heart rate data, electrodermal data and other data of the subjects in each state may be mainly acquired.

Step S102: acquiring multi-modal to-be-analyzed physiological data of a target person.

Specifically, the target person are specific individuals or groups selected as analyzed objects. The "subjects" emphasize more on "identities of personnel participating in data collection", the "target person" emphasize more on "analyzed core objects", and both overlap in most of scenarios, but may be different in viewing angle and range. For example, when the state recognition is applied to the fatigue driving monitoring, the subjects are drivers, and the data in the fatigue driving state and the non-fatigue driving state may be acquired during skilled driving performed by the drivers, and the target person are all drivers who may be in fatigue driving; or a doctor needs to analyze multi-modal physiological data of a certain patient to determine a state of an illness, at the time, the patient is both a "subject" and an unique "target person".

Kinds of modes of the to-be-analyzed physiological data of the target person are the same as those of the sample physiological data. The multi-modal to-be-analyzed physiological data of the target person is acquired according to the same method.

Further, in order to improve a confidence level of the sample physiological data and facilitate reducing individual differences in model training, the step S101: acquiring the sample physiological data in the plurality of modes of the plurality of subjects respectively in each state preset by the state classifier includes step S1011 to step S1014;

step S1011: acquiring first multi-modal physiological data within a first preset time period of the plurality of subjects respectively in each state preset by the state classifier.

Specifically, the electronic device firstly collects the first multi-modal physiological data within the first preset time period, and then performs an enhancement operation according to the first multi-modal physiological data so as to obtain a great deal of multi-modal physiological data, which lowers collection difficulty of the sample data while enriching the sample data. Just as the above-mentioned example, the electronic device in the present application can respectively acquire 10 minutes EEG data, heart rate data and electrodermal data of the plurality of subjects in a negative state and a positive state.

Step S1012: intercepting second multi-modal physiological data within a second preset time period based on the first multi-modal physiological data, the second preset time period is less than the first preset time period.

Further, there may be data fluctuation in the first multi-modal physiological data due to environmental influences, for example, at a first segment of the data, the subjects do not completely focus on watching videos, and at a final segment of the data, attentions of the subjects are transferred, which may lower accuracy of the data. Therefore, the electronic device acquires the second multi-modal physiological data within the second preset time period, and when the first preset time period is 10 minutes, the second preset time period may be 5 minutes.

Step S1013: dividing the second multi-modal physiological data according to a preset length and a preset overlapping ratio to obtain a plurality of multi-modal physiological data fragments.

For example, the electronic device divides the second multi-modal physiological data according to a length of 10 second and an overlapping ratio of 50%.

Step S1014: denoising the multi-modal physiological data fragments to obtain the sample physiological data.

Specifically, the electronic device performs targeted denoising processing on each uni-modal physiological data fragment, such as notch filtering on the EEG data and smoothing and denoising on the heart rate and electrodermal data, and thus, obtaining the sample physiological data.

Step S103: enhancing the sample physiological data by applying the GAN to obtain augmented baseline data, which includes step S1031 to step S1035:

Step S1031: constructing a generator corresponding to each uni-modal, the generator sequentially including convolutional layers and an activation function.

Step S1032: constructing a discriminator corresponding to each uni-modal, the discriminator including a plurality of fully-connected layers, and an elimination layer is introduced to a first fully-connected layer.

Step S1033: performing feature mapping and transformation on random noise by the generator, and outputting new sample data similar to the sample physiological data in each uni-modal.

Step S1034: performing adversarial training by the generator and the discriminator according to a preset learning speed until a number of iterations is reached to obtain updated new sample data corresponding to each uni-modal.

Step S1035: taking the sample physiological data and the new sample data that correspond to each uni-modal as the augmented multi-modal baseline data.

Specifically, a network structure of the GAN (Generative Adversarial Network) mainly includes two key components, i.e., the generator and the discriminator. The electronic device establishes a corresponding GAN for each uni-modal so as to augment physiological data in each mode.

The generator takes charge of generating new data samples similar to real data. The generator may be provided with a plurality of convolutional layers, and a number of convolution kernels on each of the plurality of convolutional layers is increased step by step. By setting the plurality of convolutional layers, a complex spatial structure for generating the new data samples can be constructed step by step, local relevance of the real data can be captured, and a truth of the new data samples can be enhanced. The convolutional layers perform the feature mapping and transformation on the random noise. Wherein, when there are four convolutional layers, the number of the convolution kernels of all the convolutional layers may be respectively 64, 128, 256, and 512. In addition, a nonlinear activation function is also introduced to the generator so as to obtain abundant new sample data. Common activation functions include ReLU, Leaky ReLU, Tanh, etc.

The discriminator takes charge of distinguishing whether input data is the real data or false data generated by the generator. In order to balance abilities of an adversarial generator and the discriminator, also avoid training unbalance, ensuring correspondence between feature analysis and generated hierarchies, and improving training stability and generation quality of the GAN, a number of the fully-connected layers is enabled to be similar to the number of the convolutional layers. Moreover, the plurality of fully-connected layers can enhance input data feature extraction ability, nonlinear expression ability and complex mode distinguishing ability of the discriminator so as to better complete a task of "distinguishing the real data from generated data". For example, the discriminator may include three fully-connected layers, the first fully-connected layer receives input features, such as the new sample data or real data outputted by the generator, a second fully-connected layer further extracts distinguishing features and compresses feature dimensions by means of the nonlinear activation function, and a third fully-connected layer is an output layer which outputs 0 or 1 by means of the activation function to determine whether the input data is real data or false data.

In one embodiment, the first fully-connected layer of the discriminator directly receives low-level high-dimensional original features from the generator, these features include a great deal of noise, and therefore, a random elimination layer, such as a Dropout layer, is introduced to the first fully-connected layer. The random elimination layer randomly sets outputs of a part of neurons as 0 during training to prevent the discriminator from generating a certain fixed noise mode for determination in a sample by means of the generator, instead, it focuses on learning essential features of real physiological data, reversely promotes the generator to generate augmented data closer to a real distribution, and finally improves quality of the augmented baseline data to prevent model overfitting.

Features of deep fully-connected layers have been subjected to multi-layer screening, which makes noise less and a dependence among the features is more complex. When the random elimination layer is applied at the time, semantic association that has been established may be destroyed, which results in a decrease in a discrimination ability; and the discrimination ability of the discriminator for the generated data may be excessively weakened, which makes the generator incapable of obtaining effective feedback, and finally lowers the generation quality. Therefore, in the present application, the random elimination layer is only introduced to the first fully-connected layer.

The generator and the discriminator perform adversarial training, and during training, the discriminator receives real sample physiological data and the new sample data, and tries to distinguish them from each other. At a training stage of the generator, parameters of the discriminator are constant, and parameters of the generator are only optimized, so that the new sample data generated by the generator is closer to the real sample physiological data. Similarly, at a training stage of the discriminator, the parameters of the generator are constant, and the parameters of the discriminator are only optimized, so that the discriminator correctly distinguishes the real sample physiological data from the new sample data.

The training for the generator and the discriminator is alternately performed, in each iteration, the generator is trained firstly, and then the discriminator is trained until the number of iterations is reached. Or, the samples generated by the generator are too realistic to be distinguished by the discriminator, at the time, the electronic device obtains the updated new sample data. The updated new sample data has been extremely similar to the sample physiological data, the sample physiological data in the plurality of modes and the new sample data are collectively referred to as the baseline data by the electronic device, that is, standard physiological data of users in each state can be indicated. By means of the above-mentioned enhancement operation, a number of the sample physiological data is increased.

Wherein, the preset learning speed and the number of iterations may be set according to actual demands. For example, the preset learning speed may be 0.001, and the number of iterations may be 500.

Step S104: normalizing the baseline data.

Specifically, by normalizing the baseline data enhanced by the GAN, the training stability can be remarkably improved, and quality of the new sample data can be improved. Common normalization methods include BatchNorm, LayerNorm, InstanceNorm, WeightNorm, Spectral Normalization, Gradient Normalization, and Min-Max Normalization, etc.

Step S105: extracting multi-modal graph features of the normalized baseline data by applying a GCN, and determining the multi-modal graph features as state features related to each state preset by the state classifier.

Specifically, the baseline data is the multi-modal physiological data of the subjects. In order to facilitate analyzing a physiological data relationship and combination among all the modes, individual-independent common features are extracted, and a connected graph of the baseline data is established, so that the GCN (Graph Convolutional Network) performs feature analysis according to the connected graph.

The GCN performs information aggregation of nodes by adopting a spectral graph theory by means of an adjacent matrix and a node feature matrix in the graph structure so as to realize efficient processing for graph data.

The step S105 includes step S1051 to step S1054:

step S1051: extracting features of the normalized baseline data, and establishing a connected graph according to the features of the baseline data.

Specifically, the connected graph consists of two basic elements, i.e., nodes and edges, and may be expressed as G=(V, E), wherein G denotes the connected graph, V denotes a node set, and E denotes a set of edges connected with the nodes.

Step S1052: acquiring a node feature matrix X and an adjacent matrix A in the connected graph by an input layer of the GCN, the node feature matrix X is an N×M matrix, N is a total number of nodes, M is a feature dimension of each node, and the adjacent matrix A is an N×N matrix.

The GCN mainly consists of the input layer, the hidden layers, and the output layer. The input layer is configured to receive and preprocess graph structural data.

Specifically, with node features as an example, for the $i^{th}$ node, it has a feature $X_i$, and total node features may be expressed with a matrix $X_{N×M}$, wherein N denotes the total number of the nodes, and M denotes a number (a dimension of a feature vector) of features of each node.

The adjacent matrix of the connected graph describes a connection relationship among all the nodes, which is usually expressed as $A_{N×N}$, for example, $A_{ij}$=1 denotes that the $i^{th}$ node is connected with the $j^{th}$ node, when $A_{ij}$=0, it is denoted that the $i^{th}$ node is not connected with the jth node.

Therefore, it is assumed that there are 18 nodes in the connected graph, a time-space domain connected graph with n-layer time domain features is extracted for 18 channel signals is denoted by embedding node features, and has a size of 18×n.

Step S1053: updating the node feature matrix layer by layer by hidden layers of the GCN update by means of repeated graph convolutions to generate a new node representation, a propagation formula of the hidden layers is expressed as:

$$H^{l+1} = \sigma\ (\widetilde{D}^{-\frac{1}{2}}\tilde{A}\widetilde{D}^{-\frac{1}{2}}H^l W^l)$$

wherein Ã is an adjacent matrix of a connected graph having additional self-connection, Ã=A+I, and I is a unit matrix; D̃ is a degree matrix of Ã; $\widetilde{D}^{-\frac{1}{2}}\tilde{A}\widetilde{D}^{-\frac{1}{2}}$ is a symmetric normalized Laplacian matrix of A; $H^l$ is a feature matrix on a first layer, i.e., X of the input layer; σ is the activation function; and $W^l$ is a weight matrix on the first layer.

The hidden layers are graph convolutional layers and may be stacked to form a plurality of layers, an input of the hidden layers is the feature matrix $H^l$ on a former layer, the adjacent matrix A and the weight matrix $W^l$ on a current layer, and an output thereof is the feature matrix processed according to the formula.

Firstly, the hidden layers construct the adjacent matrix Ã of the connected graph having additional self-connection, so that each node not only considers an adjacent node, but also considers self-features during aggregation; secondly, the degree matrix D̃ is computed, D̃ is a diagonal matrix, wherein D̃[i][i] is a sum of elements in the $i^{th}$ row in Ã; thirdly, the symmetric normalized Laplacian matrix is computed, which can avoid features of a high connectivity node are excessively amplified during aggregation; fourthly, a normalized matrix is multiplied by the features matrix $H^l$ on the former layer to realize adjacent feature aggregation, and is then multiplied by the weight matrix $W^l$ to realize feature dimension conversion and screening; and finally, nonlinearity is introduced by means of the activation function σ, so that the network can learn a complex association mode. The above-mentioned process is repeated on each of the hidden layers.

Step S1054: performing classification an output layer of the GCN according to the latest node feature matrix to obtain the multi-modal graph features of the normalized baseline data.

Specifically, the output layer of the GCN receives a node feature matrix $H^L$ outputted by the last hidden layer, L is a total number of the hidden layers, the matrix includes fusion features of each node subjected to multi-layer graph convolution, and the output layer compresses the node feature matrix $H^L$ to form feature vectors by means of a global pooling operation. The output layer of the GCN outputs graph-level connectivity feature vectors, i.e., the multi-modal graph features, and it concentrates a connection mode of the entire graph from the node feature matrix by means of global pooling.

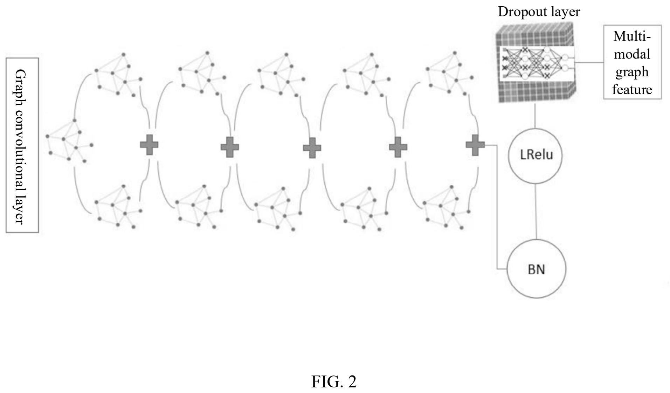

Referring to FIG. 2, the output layer of the GCN in the present application includes a BN layer, the activation function and a Dropout layer that are connected.

Wherein, the BN layer (Batch Normalization Layer) accelerates convergence rate of the GCN, reduces dependency of a model on initial parameters, and improves robustness of the model. An output of the BN layer is the node feature matrix $H^L$ outputted by the last hidden layer. Intermediate processing of the BN layer includes batch statistics computation: for features of the current batch, a mean value and variance of each feature dimension are computed; normalization: a numerical value of each feature dimension is converted into a distribution with the mean value being 0 and the variance being 1; and scaling and shifting: learnable parameters γ (scaling factor) and β (shifting factor) are introduced to adjust the normalized features: y=γ·x̂+β, and feature information loss caused by excessive normalization is avoided. An output of the BN layer is a feature matrix $H_{BN}$ subjected to batch normalization, so that the feature distribution is more stable.

The activation function determines how the neurons perform nonlinear transformation on an input signal so as to enhance an expression ability of the model for complex features. Common activation functions include a sigmoid function, a Tanh function, an ReLU (Rectified Linear Unit) function, an ELU (Exponential Linear Unit) function, and a Softmax function, etc. In the present application, the LRelu (Leaky Rectified Linear Unit) activation function is set behind the BN layer.

An input layer of the LRelu activation function is the feature matrix $H_{BN}$ subjected to batch normalization. Intermediate processing of the LRelu activation function is: f(x)=max(a·x,x), x is an inputted feature value, a is a minimal constant, and denotes that when x<0, an output is a time as greater as an input, positive value features are retained, weak negative values are retained, and a problem of gradient disappearance is relieved while nonlinearity is introduced. An output layer of the LRelu activation function is a feature vector $H_{Act}$ subjected to nonlinear transformation.

The Dropout layer is a regularization technology, and aims at reducing overfitting phenomena and improving a generalization ability of the GCN. An input of the Dropout layer is the feature vector $H_{Act}$. Intermediate processing of the Dropout layer includes: random deactivation: parts of elements in $H_{BN}$ are randomly set as 0 according to a preset probability p; retained element scaling: during training, the non-discarded elements are multiplied by $\frac{1}{1-p}$ to guarantee total energy consistence of features before and after deactivation and avoid feature mean value shifting caused by discarding; and during inference, all the features are directly outputted without deactivation. An output of the Dropout layer is a feature matrix $H_{Drop}$ subjected to the random deactivation, i.e., final multi-modal graph features of the baseline data. In conclusion, each layer structure may be selected to be used according to actual demands.

Therefore, a computational formula for overall forward propagation of the GCN in the present application is expressed as:

$$Z=f(X,A)=\tilde{A}ReLU\left(\tilde{A}XW^0\right)W^1$$

wherein Z is a newly-obtained new feature representation, i.e., the multi-modal graph features of the normalized baseline data, X is an inputted node feature matrix, and A is an inputted adjacent matrix. $W^0$ is a weight matrix of a first graph convolutional layer, and $W^1$ is a weight matrix of a last graph convolutional layer in front of the output layer.

This method further includes step S106: extracting spatial features in each uni-modal in the plurality of modes of the normalized baseline data by applying a CNN, and the spatial features in each uni-modal in the plurality of modes are determined as the state features related to each state preset by the state classifier.

Specifically, the electronic device extracts the graph features of the normalized baseline data by the GCN to obtain connectivity among multi-modal data of the normalized baseline data, while the physiological data in each uni-modal in the plurality of modes also has corresponding time series features. In order to analyze features of each uni-modal data, in the present application, the features of the baseline data are extracted by applying the CNN (Convolutional Neural Networks) at the same time.

The baseline data inputted to the CNN has been preprocessed, and then, a CNN model is constructed, wherein a size of an input layer is the same as a dimension of the preprocessed baseline data, then, local features in the baseline data are extracted by using the plurality of convolutional layers, and the nonlinearity is increased by adopting the activation function. A pooling layer is applied to reduce the dimension of a feature graph, and then, the fully-connected layers are applied to perform feature integration and classification, so that the features of the baseline data are outputted by the output layer and are used as the state features related to each state preset by the state classifier.

Therefore, the state features include the multi-modal graph features and the spatial features in each uni-modal in the plurality of modes.

Step S107: with the normalized baseline data including the state features as a source domain and the to-be-analyzed physiological data as a target domain, transfer adaptation from the source domain to the target domain is performed by applying a domain adaptation network to obtain common features related to the state features in the target domain, thereby determining the common features as individual-independent objective physiological data features in the to-be-analyzed physiological data.

Specifically, the domain adaptation network is a machine learning model, a core goal thereof is to solve the problem of data distribution differences of the "source domain" and the "target domain", thereby realizing effective transfer of knowledge from the source domain to the target domain.

Wherein, the physiological data naturally has individual differences, such as base value differences caused by inheritance, living habits, health conditions, etc., and these differences may really cover common rules related to physiological states. For example, when absolute heart rate values of different people, such as individual differences of athletes generally having lower resting heart rates, are directly compared, there may be an interference with the determination whether a person is in a "tense state".

The individual-independent objective physiological data features refer to physiological rules or parameters not depending on unique attributes of specific individuals and having universality and commonality. An extraction of the individual-independent objective physiological data features is a technical means adopted for eliminating the individual differences, so that the data more focuses on the physiological data itself rather than individual differences, and influences of personal factors on accuracy of state analysis are reduced.

Therefore, the source domain in the present application refers to "the normalized baseline data including the state features", and usually includes physiological signals that have been labeled with state features or known states; and the target domain refers to "the to-be-analyzed physiological data", and may come from new individuals or different scenarios, and there are differences between the data distribution of the target domain and the data distribution of the source domain. Objects transferred by the domain adaptation network are common knowledge related to the state in the source domain, such as an association rule between a state learned from the data of the source domain and the multi-modal graph features or an association rule between the state and the spatial features in each uni-modal in the plurality of modes, these common knowledge needs to be transferred and adapted to the target domain and is acquired by the target domain so as to finally help the extraction of the common individual-independent physiological features, i.e., the common features, in the target domain. Essence of the domain adaptation network is to eliminate or reduce distribution differences between the source domain and the target domain, and enable the model to accurately analyze the data in the target domain by means of the knowledge of the source domain.

The domain adaptation network usually includes modules, such as a "feature extractor", an "adaptation layer", and a "task head".

The feature extractor takes charge of extracting base features, such as time domain and frequency domain features of the physiological signals, from the source domain and the target domain.

The adaptation layer is a core intermediate module for connecting features of the source domain and the target domain and realizing distribution alignment, and designs a targeted alignment mechanism according to spatial types (graph space/European-type space) of the features so as to finally realize a close feature distribution between the source domain and the target domain.

Firstly, the state features extracted from the source domain by the GCN/CNN will firstly enter an adaptation layer of a corresponding space. For example, state features extracted from the baseline data by the GCN are inputted to an adaptation layer of the graph space so as to be processed, state features extracted by the CNNs are inputted to an adaptation layer of the European-type space so as to be processed. At the same time, the same type of features extracted from the target domain by the same GCN and CNN will also be inputted to the corresponding adaptation layers so as to be processed.

The adaptation layer performs distribution calibration on the features from the source domain and the target domain within a same space. For example, by designing a loss function, the distribution of source domain features and target domain features outputted by the adaptation layer in this space is forced to be close as much as possible. For example, node association modes of the source domain and the target domain in the graph space are enabled to be more similar, or probability distributions of the features in the European-type space are closer.

The task head further processes the features outputted by the adaptation layer, filters residual domain-specific noise or redundant information, and retains the most core common features.

Then, the source domain, the target domain and the adaptation layer jointly constitute a complete link of "feature extraction, spatial adaptation, distribution alignment, and knowledge transfer" to complete the transfer adaptation from the source domain to the target domain, reduce a feature distribution distance between the source domain and the target domain and obtain the common features related to the state features in the target domain, the common features are the state features obtained after the individual differences are stripped, and finally, the common features are determined as the individual-independent objective physiological data features in the to-be-analyzed physiological data.

Step S108: inputting the individual-independent objective physiological data features to the state classifier, and determining the personal state of the target person according to an output result of the state classifier.

Specifically, the state classifier is set according to types of to-be-analyzed states. For example, when the state recognition is applied to user emotion recognition, the preset state classifier is configured to distinguish whether the individual-independent physiological data features belong to a positive emotion or a negative emotion.

Common classifiers include logistic regression, a support vector machine, a decision tree, a random forest, a K-nearest neighbor, and linear discriminant analysis, etc., and the most appropriate classifier is selected according to an application scenario of state analysis.

It should be noted that the step S105 may be performed before the step S106, or performed after the step S106, or performed while the step S106 is performed, and current way is only a possible performing way, but cannot be used as a limitation on the embodiment of the present application.

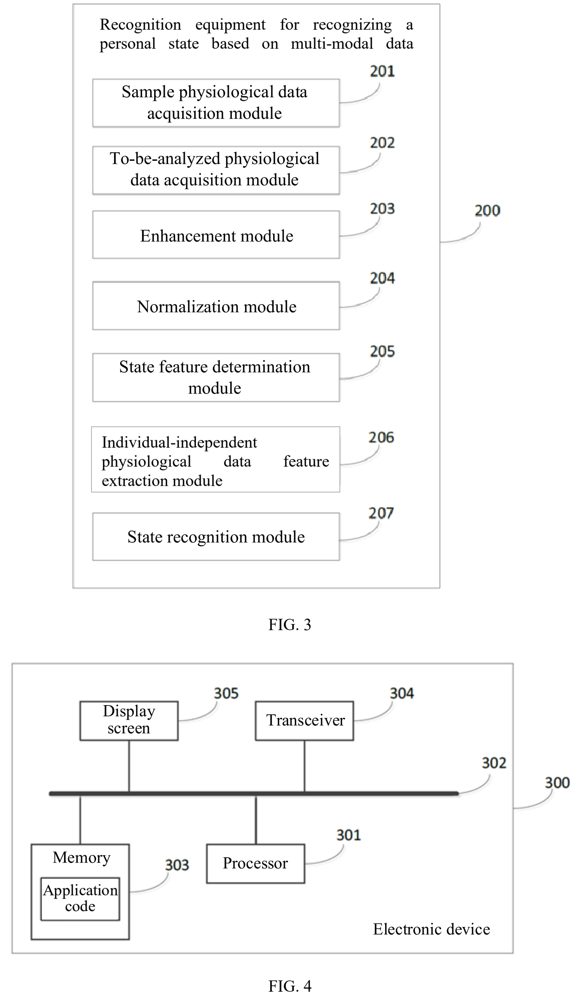

In order to better perform the above-mentioned method, an embodiment of the present application further provides a recognition equipment for recognizing the personal state based on multi-modal data, referring to FIG. 3, the recognition equipment 200 for recognizing the personal state based on multi-modal data includes:

a sample physiological data acquisition module 201 configured to acquire sample physiological data in the plurality of modes of the plurality of subjects respectively in each state preset by the state classifier;

a to-be-analyzed physiological data acquisition module 202 configured to acquire multi-modal to-be-analyzed physiological data of the target person;

an enhancement module 203 configured to enhance the sample physiological data by applying the GAN to obtain augmented baseline data;

a normalization module 204 configured to normalize the baseline data;

a state feature determination module 205 configured to extract multi-modal graph features of the normalized baseline data by applying the GCN, and determine the multi-modal graph features as state features related to each state preset by the state classifier;

an objective physiological data feature extraction module 206 configured to, with the normalized baseline data including the state features as the source domain and the to-be-analyzed physiological data as the target domain, perform the transfer adaptation from the source domain to the target domain by applying the domain adaptation network to obtain common features related to the state features in the target domain, thereby determining the common features as individual-independent objective physiological data features in the to-be-analyzed physiological data; and

a state recognition module 207 configured to input the individual-independent objective physiological data features to the state classifier, and determine the personal state of the target person according to the output result of the state classifier.

Further, the state feature determination module 205 is further configured to extract spatial features in each uni-modal in the plurality of modes of the normalized baseline data by applying the CNN, and determine the spatial features in each uni-modal in the plurality of modes as the state features related to each state preset by the state classifier.

Further, the sample physiological data acquisition module 201 is specifically configured to:

acquire first multi-modal physiological data within a first preset time period of the plurality of subjects respectively in each state preset by the state classifier;

intercept second multi-modal physiological data within a second preset time period based on the first multi-modal physiological data, the second preset time period is less than the first preset time period;

divide the second multi-modal physiological data according to a preset length and a preset overlapping ratio to obtain a plurality of multi-modal physiological data fragments; and

denoise the multi-modal physiological data fragments to obtain the sample physiological data.

Further, the enhancement module 203 is specifically configured to:

construct a generator corresponding to each uni-modal, the generator sequentially including convolutional layers and an activation function;

construct a discriminator corresponding to each uni-modal, the discriminator including a plurality of fully-connected layers, and an elimination layer is introduced to a first fully-connected layer;

perform feature mapping and transformation on random noise by the generator, and output new sample data similar to the sample physiological data in each uni-modal;

perform adversarial training by the generator and the discriminator according to a preset learning speed until the number of iterations is reached to obtain updated new sample data corresponding to each uni-modal; and

take the sample physiological data and the new sample data that correspond to each uni-modal as the augmented multi-modal baseline data.

Further, the state feature determination module 205 is configured to extract multi-modal graph features of the normalized baseline data by applying the GCN, which specifically includes:

features of the normalized baseline data are extracted, and the connected graph is established according to the features of the baseline data;

an input layer of the GCN acquires the node feature matrix X and the adjacent matrix A in the connected graph, the node feature matrix X is an N×M matrix, N is the total number of nodes, M is the feature dimension of each node, and the adjacent matrix A is the N×N matrix;

The hidden layers of the GCN update the node feature matrix layer by layer by means of repeated graph convolutions to generate a new node representation, the propagation formula of the hidden layers is expressed as:

$$H^{l+1} = \sigma \ (\widetilde{D}^{-\frac{1}{2}}\widetilde{A}\widetilde{D}^{-\frac{1}{2}}H^l W^l \ )$$

wherein Ã is the adjacent matrix of the connected graph having additional self-connection, Ã=A+I, and I is the unit matrix; D̃ is the degree matrix of Ã; $\widetilde{D}^{-\frac{1}{2}}\widetilde{A}\widetilde{D}^{-\frac{1}{2}}$ is the symmetric normalized Laplacian matrix of A; $H^l$ is the feature matrix on the first layer, i.e., X of the input layer; σ is the activation function; and $W^l$ is the weight matrix on the first layer; and

the output layer of the GCN performs classification according to the latest node feature matrix to obtain the multi-modal graph features of the normalized baseline data.

Various change ways and specific embodiments of the method of the above-mentioned embodiment are also applicable to the recognition equipment for recognizing the personal state based on multi-modal data in the present embodiment. Based on the above-mentioned detailed description of the recognition method for recognizing the personal state based on multi-modal data, the skilled in the art that can clearly know an implementation method of the recognition equipment for recognizing the personal state based on multi-modal data in the present embodiment, and therefore, it will be no longer repeated herein in order to simplify the description.

In order to better perform the above-mentioned method, an embodiment of the present application provides an electronic device. Referring to FIG. 4, the electronic device 300 includes a processor 301, a memory 303, and a display screen 305. Wherein, the memory 303 and the display screen 305 are both connected with the processor 301, for example, they are connected by a bus 302. Optionally, the electronic device 300 may further include a transceiver 304. It should be noted that a number of the transceivers 304 is not limited to one during actual applications, and the structure of the electronic device 300 does not constitute a limitation on the embodiment of the present application.

The processor 301 may be a CPU (Central Processing Unit), a general-purpose processor, a DSP (Digital Signal Processor), an ASIC (Application Specific Integrated Circuit), an FPGA (Field Programmable Gate Array) or other programmable logic devices, transistor logic devices, hardware components or any combinations thereof. The processor 301 may implement or perform various exemplary logic boxes, modules and circuits described in conjunction with contents disclosed by the present application. The processor 301 may also be a combination for achieving a computation function, such as a combination including one or more microprocessors and a combination of the DSP and the microprocessors.

The bus 302 may include a communication path for transmitting information among the above-mentioned assemblies. The bus 302 may be a PCI (Peripheral Component Interconnect) bus or an EISA (Extended Industry Standard Architecture) bus, etc. The bus 302 may be divided into an address bus, a data bus, a control bus, etc.

The memory 303 may be an ROM (Read Only Memory) or other types of static storage devices capable of storing static information and instructions, an RAM (Random Access Memory) or other types of dynamic storage devices capable of storing information and instructions, and may also be an EEPROM (Electrically Erasable Programmable Read Only Memory), a CD-ROM (Compact Disc Read Only Memory) or other compact disc memories, compact disk memories (including a compact disc, a laser disk, an optical disk, a digital versatile disc, a blue-ray disc, etc.), a magnetic disk storage medium or other magnetic storage devices, or any other medium capable of carrying or storing expected program codes in an instruction or data structural form and accessible for a computer, but is not limited thereto.

The memory 303 is configured to store an application code for executing the solution in the present application, and is controlled by the processor 301 to perform execution. The processor 301 is configured to execute the application code stored in the memory 303 so as to realize the contents shown in the above-mentioned method embodiment.

The electronic device 300 shown in FIG. 4 is only used as an example, but should not bring any limitations on the function and use range of the embodiment of the present application.

An embodiment of the present application further provides a computer-readable storage medium, storing a computer program, the recognition method for recognizing the personal state based on multi-modal data provided in the above-mentioned embodiment is implemented when the program is executed by the processor. By applying the GAN, original sample physiological data can be enhanced to generate more diversified data, which solves the problem of sample insufficiency or data unbalance possibly occurring during physiological data collection; by extracting the multi-modal graph features of the baseline data by applying the GCN, the complex association and interaction among different-modal physiological data can be captured, and physiological states of users can be reflected more accurately; by performing transfer learning from the source domain to the target domain by applying the domain adaptation network with the baseline data as the source domain and the to-be-analyzed physiological data as the target domain, individual differences in physiological data of the different users can be overcome, the individual-independent objective physiological data features can be extracted, and finally, the individual-independent objective physiological data features are inputted to the preset state classifier, by which accurate recognition for the personal state of the target person can be realized.

In the present embodiment, the computer-readable storage medium may be a tangible device capable of holding or storing instructions used by an instruction execution device. The computer-readable storage medium may include, but is not limited to an electric storage device, a magnetic storage device, an optical storage device, an electromagnetic storage device, a semiconductor storage device or any combinations thereof. Specifically, the computer-readable storage medium may be a portable computer disk, a hard disk, a U disk, a random access memory (RAM), a read-only memory (ROM), an erasable programmable read only memory (EPROM or a flash memory), a static random access memory (SRAM), a portable compact disc read-only memory (CD-ROM), a digital video disk (DVD), a memory stick, a floppy disk, a compact disc, a diskette, a mechanical encoding device and any combinations thereof.

The computer program in the present embodiment includes a program code for performing all of the above-mentioned methods, and the program code may include instructions for correspondingly performing the steps of the method provided in the above-mentioned embodiment. The computer program may be downloaded from the computer-readable storage medium to each computing/processing device, or downloaded to an external computer or external storage device by a network (such as the Internet, a local area network, a wide area network and/or a wireless network). The computer program may be completely executed on a user computer or executed as an independent software package.

The above descriptions are all preferred embodiments of the present application, but are not intended to limit the protective scope of the present application. Therefore, any equivalent changes based on a structure, shape and principle of the present application shall fall within the protective scope of the present application.

In addition, it should be understood that relational terms such as first and second are only used to distinguish one entity or operation from another one, but do not necessarily require or imply the presence of such an actual relationship or order among these entities or operations. Terms "includes", "including" or any other variants thereof are intended to cover non-excludable inclusion, so that a process, method, article or device including a series of elements not only includes those elements, but also includes other elements not listed clearly, or further includes inherent elements of such a process, method, article or device.

## Claims

1. A recognition method for recognizing a personal state based on multi-modal data, comprising:

    acquiring sample physiological data in a plurality of modes of a plurality of subjects respectively in each state preset by a state classifier;
    acquiring multi-modal to-be-analyzed physiological data of a target person;

enhancing the sample physiological data by applying a GAN (Generative Adversarial Network) to obtain augmented baseline data;
normalizing the baseline data;
extracting multi-modal graph features of the normalized baseline data by applying a GCN (Graph Convolutional Network), and determining the multi-modal graph features as state features related to each state preset by the state classifier;
with the normalized baseline data comprising the state features as a source domain and the multi-modal to-be-analyzed physiological data as a target domain, and performing transfer adaptation from the source domain to the target domain by applying a domain adaptation network to obtain common features related to the state features in the target domain, thereby determining the common features as individual-independent objective physiological data features in the multi-modal to-be-analyzed physiological data; and
inputting the individual-independent objective physiological data features to the state classifier, and determining the personal state of the target person according to an output result of the state classifier.

2. The recognition method for recognizing a personal state based on multi-modal data according to claim 1, further comprising extracting spatial features in each uni-modal in the plurality of modes of the normalized baseline data by applying a CNN (Convolutional Neural Network).

3. The recognition method for recognizing a personal state based on multi-modal data according to claim 1, **characterized in that** the acquiring sample physiological data in the plurality of modes of the plurality of subjects respectively in each state preset by the state classifier comprises:

    acquiring first multi-modal physiological data within a first preset time period of the plurality of subjects respectively in each state preset by the state classifier;
    intercepting second multi-modal physiological data within a second preset time period based on the first multi-modal physiological data, the second preset time period is less than the first preset time period;
    dividing the second multi-modal physiological data according to a preset length and a preset overlapping ratio to obtain a plurality of multi-modal physiological data fragments; and
    denoising the plurality of multi-modal physiological data fragments to obtain the sample physiological data.

4. The recognition method for recognizing a personal state based on multi-modal data according to claim 1, **characterized in that** the enhancing the sample physiological data by applying the GAN to obtain the augmented baseline data comprises:

constructing a generator corresponding to each uni-modal, the generator sequentially comprising convolutional layers and an activation function;
constructing a discriminator corresponding to each uni-modal, the discriminator comprising a plurality of fully-connected layers, and an elimination layer is introduced to a first fully-connected layer of the plurality of fully-connected layers;
performing feature mapping and transformation on random noise by the generator, and outputting new sample data similar to the sample physiological data in each uni-modal;
performing adversarial training by the generator and the discriminator according to a preset learning speed until a number of iterations is reached to obtain updated new sample data corresponding to each uni-modal; and
taking the sample physiological data and the updated new sample data corresponding to each uni-modal as the augmented baseline data.

5. The recognition method for recognizing a personal state based on multi-modal data according to claim 1, **characterized in that** the extracting multi-modal graph features of the normalized baseline data by applying the GCN comprises:

extracting features of the normalized baseline data, and establishing a connected graph according to the features of the normalized baseline data;
acquiring a node feature matrix X and an adjacent matrix A in the connected graph by an input layer of the GCN, the node feature matrix X is an N×M matrix, N is a total number of nodes, M is a feature dimension of each node, and the adjacent matrix A is an N×N matrix;
updating the node feature matrix layer by layer by hidden layers of the GCN by means of repeated graph convolutions to generate a new node representation, a propagation formula of the hidden layers is expressed as:

$$H^{l+1} = \sigma \; (\widetilde{D}^{-\frac{1}{2}}\widetilde{A}\widetilde{D}^{-\frac{1}{2}}H^l W^l)$$

wherein Ã is an adjacent matrix of a connected graph having additional self-connection, Ã=A+I, and I is a unit matrix; D̃ is a degree matrix of Ã;

$\widetilde{D}^{-\frac{1}{2}}\widetilde{A}\widetilde{D}^{-\frac{1}{2}}$ is a symmetric normalized Laplacian matrix of A; $H^l$ is a feature matrix on a first layer, i.e., X of the input layer; $\sigma$ is an activation function; and $W^l$ is a weight matrix of the first layer; and
performing classification by an output layer of the GCN according to a latest node feature matrix to obtain the multi-modal graph features of the normalized baseline data.

6. A recognition equipment (200) for recognizing a personal state based on multi-modal data, comprising:

a sample physiological data acquisition module (201) configured to acquire sample physiological data in a plurality of modes of a plurality of subjects respectively in each state preset by a state classifier;
a to-be-analyzed physiological data acquisition module (202) configured to acquire multi-modal to-be-analyzed physiological data of a target person;
an enhancement module (203) configured to enhance the sample physiological data by applying a GAN to obtain augmented baseline data;
a normalization module (204) configured to normalize the baseline data;
a state feature determination module (205) configured to extract multi-modal graph features of the normalized baseline data by applying the GCN, and determine the multi-modal graph features as state features related to each state preset by the state classifier;
an individual-independent physiological data feature extraction module (206) configured to, with the normalized baseline data comprising the state features as a source domain and the to-be-analyzed physiological data as a target domain, perform a transfer adaptation from the source domain to the target domain by applying a domain adaptation network to obtain common features related to the state features in the target domain, thereby determining the common features as individual-independent objective physiological data features in the to-be-analyzed physiological data; and
a state recognition module (207) configured to input the individual-independent objective physiological data features to the state classifier, and determine the personal state of the target person according to an output result of the state classifier.

7. An electronic device (300), comprising:

at least one processor (301);
at least one memory (303);
at least one computer program, **characterized in that**, the at least one computer program is stored in the at least one memory (303) and is configured to be executed by the at least one processor (301), and the at least one computer program is configured to implement the method according to any one of claims 1-5.

8. A computer-readable storage medium, comprising a computer program stored thereon, **characterized in that**, the computer program is to be loaded by a processor to execute the method according to any one of claims 1-5.

Acquiring sample physiological data in a plurality of modes of a plurality of subjects respectively in each state preset by a state classifier — S101

Acquiring multi-modal to-be-analyzed physiological data of a target person — S102

Enhancing the sample physiological data by applying a GAN to obtain augmented baseline data — S103

Normalizing the baseline data — S104

Extracting spatial features in each uni-modal in the plurality of modes of the normalized baseline data by applying a CNN, and determining the spatial features in each uni-modal in the plurality of modes as the state features related to each state preset by the state classifier — S106

Extracting multi-modal graph features of the normalized baseline data by applying a GCN, and determining the multi-modal graph features as state features related to each state preset by the state classifier — S105

With the normalized baseline data comprising the state features as a source domain and the multi-modal to-be-analyzed physiological data as a target domain, and performing transfer adaptation from the source domain to the target domain by applying a domain adaptation network to obtain common features related to the state features in the target domain, thereby determining the common features as individual-independent objective physiological data features in the multi-modal to-be-analyzed physiological data — S107

Inputting the individual-independent objective physiological data features to the state classifier, and determining the personal state of the target person according to an output result of the state classifier — S108

FIG. 1

FIG. 2

Recognition equipment for recognizing a personal state based on multi-modal data

Sample physiological data acquisition module — 201

To-be-analyzed physiological data acquisition module — 202

Enhancement module — 203

Normalization module — 204

State feature determination module — 205

Individual-independent physiological data feature extraction module — 206

State recognition module — 207

200

FIG. 3

Display screen — 305

Transceiver — 304

302

300

Memory

Application code — 303

Processor — 301

Electronic device

FIG. 4

Europäisches
Patentamt

European
Patent Office

Office européen
des brevets

# EUROPEAN SEARCH REPORT

**Application Number**

EP 25 21 3230

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG JING ET AL: "Multi-source Selective Graph Domain Adaptation Network for cross-subject EEG emotion recognition", NEURAL NETWORKS. ELSEVIER SCIENCE PUBLISHERS, BARKING., GB, vol. 180, 24 September 2024 (2024-09-24), XP087639121, ISSN: 0893-6080, DOI: 10.1016/J.NEUNET.2024.106742 [retrieved on 2024-09-24] * the whole document * | 1-8 | INV. G06N3/042 G06N3/045 G06N3/0475 G06N3/096 ADD. G06N3/0464 G06N3/048 G06N3/09 G06N3/094 G06N5/022 |
| X | CHEN SHINAN ET AL: "Cross-subject emotion recognition in brain-computer interface based on frequency band attention graph convolutional adversarial neural networks", JOURNAL OF NEUROSCIENCE METHODS. ELSEVIER SCIENCE PUBLISHER B.V., AMSTERDAM., NL, vol. 411, 3 September 2024 (2024-09-03), XP087609049, ISSN: 0165-0270, DOI: 10.1016/J.JNEUMETH.2024.110276 [retrieved on 2024-09-03] * the whole document * | 1-8 | |
| A | CHEN BIANNA ET AL: "Ugan: Uncertainty-Guided Graph Augmentation Network for EEG Emotion Recognition", IEEE TRANSACTIONS ON COMPUTATIONAL SOCIAL SYSTEMS IEEE, vol. 12, no. 2, 11 November 2024 (2024-11-11), pages 695-707, XP034869109, DOI: 10.1109/TCSS.2024.3488201 [retrieved on 2024-11-11] * the whole document * | 1-8 | |

**TECHNICAL FIELDS SEARCHED (IPC)**

G06N
G06F

The present search report has been drawn up for all claims

| Place of search | Date of completion of the search | Examiner |
|---|---|---|
| The Hague | 19 March 2026 | Papadakis, Georgios |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)